(19) Europäisches Patentamt / European Patent Office / Office européen des brevets

(11) **EP 2 778 127 A1**

(12) **EUROPEAN PATENT APPLICATION**

(43) Date of publication:
**17.09.2014 Bulletin 2014/38**

(51) Int Cl.:
*C01B 25/45* (2006.01)　　*H01M 4/58* (2010.01)

(21) Application number: **13159638.9**

(22) Date of filing: **15.03.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Clariant International Ltd.
4132 Muttenz (CH)**

(72) Inventor: **Forbert, Rainald
85368 Moosburg (DE)**

(74) Representative: **Stolmár & Partner
Blumenstraße 17
80331 München (DE)**

(54) **Lithium transition metal phosphate secondary agglomerates and process for its manufacture**

(57)　The present invention relates to a Lithium-transition-metal-phosphate compound of formula $Li_{0.9+x}Fe_{1-y}M_yPO_4$) in the form of secondary particles made of agglomerates of primary particles wherein the primary particles have a size in the range of 0.02-2 $\mu$m and the secondary particles a mean size in the range of 10-40 $\mu$m, a BET surface of 6-15 $m^2$/g and a bulk density of 800-1200 g/l, a process for its manufacture and the use thereof.
...

Figure 1a

EP 2 778 127 A1

Printed by Jouve, 75001 PARIS (FR)

**Description**

The present invention relates to a lithium transition metal phosphate compound of formula $Li_{0.9+x}Fe_{1-y}M_y(PO_4)$ in the form of secondary particles made of primary particles, a process for its manufacture and its use as active material in electrodes for secondary lithium-ion-batteries.

Rechargeable lithium ion batteries have been widely used in the past and in the presence as power sources in a wide range of applications such as mobile phones, laptop computers, digital cameras, electrical vehicles and home appliances. In rechargeable lithium ion batteries, cathode materials are one of the key components and mainly devoted to the performance of the batteries. Since the pioneering work of Goodenough et al. (Padhi, Goodenough et al, J. Electrochem. Soc. 1997, 144, 1188) $LiMPO_4$ compounds with M=Fe, Mn, Ni and Co with an ordered olivine-type structure have attracted an extensive attention due to their high theoretical specific capacity of around 170 mAhg$^{-1}$.

$LiMPO_4$ compounds adopt an olivine related structure which consists of hexagonal closed packing of oxygen atoms with $Li^+$ and $M^{2+}$ cations located in half of the octahedral sides and $P^{5+}$ cations in 1/8 of tetrahedral sides. This structure may be described as chains along the c direction of edge sharing $MO_6$ octahedra that are cross-linked by the $PO_4$ groups forming a three-dimensional network. Tunnels perpendicular to the [010] and [001] directions contain octahedrally coordinated $Li^+$ cations along the b-axis which are mobile in these cavities. Among these phosphates, $LiFePO_4$ is the most attractive, because of its high stability, low cost and high compatibility with environments.

However, it is difficult to attain the full capacity because electronic conductivities are very low, which leads to initial capacity loss and poor rate capability and diffusion of $Li^+$ ion across the $LiFePO_4/FePO_4$ boundary is slow due its intrinsic character. The pure electrical performance of $LiFePO_4$ cathode material has also attracted interest among many researches.

It was found that for $LiFePO_4$ and related compounds small particle size and well shaped crystals are important for enhancing the electrochemical properties. In particles with a small diameter the Li-ions may diffuse over smaller distances between the surfaces and center during Li-intercalation and de-intercalation and $LiMPO_4$ on the particle surface contributes mostly to the charge/discharge reaction.

Substitution of $Li^+$ or $Fe^{2+}$ with cations is a further way to attain full capacity as described for example by Yamada et al. J. Electrochem. Soc. 2001, 148, A960, A1153, A747 which reported the preparation of Mn-doped $LiMn_{0.6}Fe_{0.4}PO_4$. Further, doped $LiZn_{0.01}Fe_{0.99}PO_4$ was also proposed. Also doping with cobalt, titanium, vanadium and molybdenum, chromium and magnesium is known. Herle et al. in Nature Materials, Vol. 3, pp. 147-151 (2004) describe lithium-iron and lithium-nickel phosphates doped with zirconium. Morgan et al. describes in Electrochem. Solid State Lett. 7 (2), A30-A32 (2004) the intrinsic lithium-ion conductivity in $Li_xMPO_4$ (M = Mn, Fe, Co, Ni) olivines. Yamada et al. in Chem. Mater. 18, pp. 804-813, 2004 deal with the electrochemical, magnetic and structural features of $Li_x(Mn_yFe_{1-y})PO_4$, which are also disclosed e.g. in WO2009/009758. Structural variations of $Li_x(Mn_yFe_{1-y})PO_4$, i.e. of the lithiophilite-triphylite series, were described by Losey et al. The Canadian Mineralogist, Vol. 42, pp. 1105-1115 (2004).

Ravet et al. (Proceedings of 196th ECS meeting 1999, 99-102) showed that carbon coated $LiFePO_4$ with 1 wt-% carbon content can deliver a discharge capacity of 160 mAh/g$^{-1}$ at 80°C at a discharge rate of C/10 using a polymer electrolyte.

Various approaches for preparing carbon composites and carbon coated $LiMPO_4$ materials have been published so far.

As discussed in the foregoing, the morphology of the particles of $LiMPO_4$ compounds is one of the essential key factors for obtaining high charge and discharge capacities and the full theoretical capacity. However, synthesis of these compounds especially via wet chemistry methods or hydrothermal methods yields materials with large primary particles causing a negative impact such as a relatively low capacity of the related lithium cells.

The main disadvantages of powders comprising smaller particles are a very small bulk and tap density and a different processing compared to compounds with larger particle sizes.

US 2010/0233540 A1 describes secondary agglomerates of primary particles of a lithium iron phosphate with an olivine type structure with an average particle diameter of the secondary agglomerates of 5 to 100 $\mu$m and with a porosity of 50-40% consisting of primary particles of 50-550 nm represented by the formula $Li_{1+A}Fe_{1-x}M_x(PO_{4-b})X_b$. The primary particles are synthesized under super critical hydrothermal conditions. The secondary agglomerates according to US 2010/0233540 A1 are obtained by a spray drying and have a spherical form and the BET-surface of these secondary agglomerates is 5-15 m$^2$/g.

The disadvantages of the process as described in US 2010/0233540 A1 is the energy consumption during the drying of the slurries which have a solid content of only 5-20%. The duration of the pyrolysis of the secondary agglomerates after spray drying is 10 hours and longer which also generates increased energy costs.

It was therefore an object of the present invention to provide lithium transition metal phosphates in particle form comprising primary and secondary particles, whereas the secondary particles are consisting of agglomerated primary particles with or without carbon coating and which have similar if not better electric properties than lithium transition metal phosphates in powder form, but provide a high bulk and tap density, therefore providing increased electrode density and hence the energy density of the battery when the lithium transition metal phosphate according to the present invention is used as the active electrode material. Further, the use of high energy mills with high specific milling energies and the need to use very small grinding balls of approx. 100 $\mu$m diameter should be avoided during preparation (due to excessive costs of mills using such grindiung balls) of such lithium transition metal phosphates agglomerates.

This object is achieved by a lithium-transition-metal-phosphate of formula $Li_{0.9+x}Fe_{1-y}M_y(PO_4)$ in the form of secondary particles made of agglomerates of primary particles wherein the primary particles have a size in the range of 0.02-2 $\mu$m and the secondary particles have a mean size in the range of 10-40 $\mu$m and a BET surface of 6-15 $m^2/g$. x is a number $\leq 0.3$ and $0 \leq y \leq 1$. Further, the secondary lithium transition metal phosphate agglomerates have a bulk density of 800-1200 g/l. Surprisingly it was found that the lithium-transition-metal-phosphates according to the invention when used as active material in electrodes for secondary lithium ion batteries display a high electrical conductivity and an improved electric capacity as well as improved rate characteristics compared to batteries with electrodes having an active material of the prior art.

The lithium-transition-metal-phosphate according to the invention may be doped or non-doped.

Therefore, the term "a or the lithium-transition-metal-phosphate" means within the scope of this invention both a doped or non-doped lithium-transition-metal-phosphate as is also expressed by the stoichiometric chemical formula $Li_{0.9+x}Fe_{1-y}M_y(PO_4)$. Lithium may be present in slightly understoichiometric amounts (x < 0.1), in exactly stoichiometric (x = 0.1) amounts or in excess stoichiometry (overstoichiometric 0.1 <x $\leq$0.3).

"Non-doped" means pure, in particular phase-pure lithium-transition-metal-phosphate having the formula $Li_{0.9+x}Fe_{1-y}M_y(PO_4)$ wherein x has the same meaning as above and y is 0. Non-limiting representative examples for such compounds according to the invention are $LiFePO_4$, $LiMnPO_4$, $LiCoPO_4$, $LiNiPO_4$, $LiRuPO_4$ and the like, specifically $LiFePO_4$ and $LiMnPO_4$ and $LiCoPO_4$.

A "doped" lithium transition metal phosphate means a compound of the formula $Li_{0.9+x}Fe_{1-y}M_yPO_4$ wherein x has the same meaning as above and y is >0, that is, an additional metal (including transition metals) or semimetal M is present.

As recited above in further specific embodiments of the invention M may be selected from the group consisting of metals and semimetals like Co, Ni, Al, Mg, Sn, Pb, Nb ,B, Cu, Cr, Mo, Ru, V, Ga, Si, Sb, Ca, Sr, Ba, Ti, Zr, Cd, Mn and mixtures thereof. Preferably M represents Co, Mn, Mg, Nb, Ni, Al, Zn, Ca, Sb and mixtures thereof and y is in a range of $\leq 0.5$ and $\geq 0.001$.

Exemplary non limiting compounds according to the invention are $Li_{0.9+x}Fe_{1-y}Mg_y(PO_4)$, $Li_{0.9+x}Fe_{1-y}Nb_y(PO_4)$, $Li_{0.9+x}Fe_{1-y}Co_y(PO_4)$, $Li_{0.9+x}Fe_{1-y}Zn_y(PO_4)$, $Li_{0.9+x}Fe_{1-y}Al_y(PO4)$, $Li_{0.9+x}Fe_{1-y}(Zn,Mg)_y(PO_4)$, $Li_{0.9+x}Fe_{1-y}Mn_y(PO_4)$, with x and y having the same meanings as recited above with the values for y as defined in the foregoing paragraph.

In other embodiments of the invention, M is Mn, Co, Zn, Mg, Ca, Al or combinations thereof, in particular Mn, Mg and/or Zn. It has been surprisingly found that the electrochemically inactive dopants Mg, Zn, Al, Ca, in particular Mg and Zn provide materials with particularly high energy density and capacity when they are used as electrode materials.

The substitution (or doping) by these metal cations that are in themselves electrochemically inactive seems to provide the very best results at values of y = 0.03 - 0.15, preferably 0.05 - 0.08, in particular 0.05 $\pm$ 0.01 with regard to energy density and capacity of the lithium-transition-metal-phosphate according to the invention.

It was found that for compounds according to the invention such as $Li_{0.9}Fe_{0.9}0Zn_{0.10}(PO_4)$, $Li_{0.95}Fe_{0.90}Zn_{0.10}(PO_4)$ and $Li_{0.95}Fe_{0.93}Zn_{0.07}(PO_4)$ and $LiFe_{0.90}Zn_{0.10}(PO_4)$ the 3.5 V plateau is longer than for $Li_{0.95}FePO_4$, $LiFePO_4$ or $Li_{0.90}FePO_4$ and the specific capacity is higher, which means an increase in energy density.

In the present invention, the BET surface is in the range of 6-15 $m^2/g$.

In one embodiment of the invention, the secondary agglomerates have a porosity. Specifically their bulk porosity is in the range of 65-80%.

In one further embodiment, the lithium transition metal phosphates according to the invention have an excellent tap porosity in the range of 55-65%.

The lithium transition metal phosphate according to the invention display also excellent bulk, tap and press densities (the latter especially when used as the single or one of the active materials in a cathode). Their bulk density is in the range of 800-1200 g/l. Their tap density is in the range of 1250-1600 g/l. Further the lithium transition metal phosphate according to the invention has an excellent press density in the range of 2000-2800 g/l. These unexpectedly good properties of the material according to the invention improve considerably the processing of these materials in the manufacturing process of electrodes since the machines used for fabricating electrodes can be filled with material to be processed to a much larger degree, enabling a much higher throughput.

In a specific embodiment, the lithium transition metal phosphate according to the invention is $LiFePO_4$. In still another specific embodiment, the lithium transition metal phosphate according to the invention is $LiFe_{1-y}Mn_yPO_4$.

In still further embodiments, the lithium-transition-metal-phosphate comprises carbon.

The carbon is particularly preferably evenly distributed throughout the lithium-transition-metal-phosphate. In other words, the carbon forms a type of matrix in which the lithium-transition-metal-phosphate according to the invention is embedded. It makes no difference for the meaning of the term "matrix" used herein whether e.g. the carbon particles serve as "nucleation sites" for the $Li_{0.9+x}Fe_{1-y}M_y(PO_4)$ particles according to the invention, i.e. whether these nucleate on the carbon, or whether, as in a particularly preferred development of the present invention, the individual particles of the lithium-iron metal phosphate $Li_{0.9+x}Fe_{1-y}M_y(PO_4)$ are covered in carbon, i.e. sheathed or in other words at least partially coated. More specifically, the primary particles of the lithium transition metal phosphate according to the invention have a conductive carbon deposit on at least a part of the surface of the primary particles. Both variants are considered as equivalent according to the invention and fall under the above definition as "comprising carbon".

Important for the purpose of the present invention is merely that the carbon is evenly distributed in the entirety of the (primary and secondary) particles of the lithium-transition-metal-phosphate $Li_{0.9+x}Fe_{1-y}M_y(PO_4)$ according to the invention and forms a type of (three-dimensional) matrix. In embodiments of the present invention, the presence of carbon or a carbon matrix may make obsolete the further addition of electrically conductive additives such as e.g. conductive carbon black, graphite etc. when using the $Li_{0.9+x}Fe_{1-y}M_y(PO_4)$ according to the invention as electrode material.

In a further embodiment of the invention, the proportion of carbon relative to the lithium-transition-metal-phosphate is $\leq$ 4 wt.-%, in further embodiments 2.5 wt.-%, in still further embodiments $\leq$ 2.2 wt.-% and in still further embodiments $\leq$ 2.0 wt.-% or $\leq$ 1.5 wt.-%. Thus the best energy densities of the material according to the invention are achieved.

The object of the present invention is further achieved by an electrode, more specifically by a cathode for a lithium secondary battery comprising as active material a lithium transition metal phosphate according to the invention.

Typical further constituents of an electrode according to the invention (or in the so-called electrode formulation) are, in addition to the active material, also conductive carbon blacks as well as a binder. According to the invention, however, it is even possible to obtain a usable electrode with active material containing or consisting of the lithium-transition-metal-phosphate according to the invention without further added conductive agent (i.e. e.g. conductive carbon black).

Any binder known per se to a person skilled in the art can be used as binder, such as for example polytetrafluoroethylene (PTFE), polyvinylidene difluoride (PVDF), polyvinylidene difluoride hexafluoropropylene copolymers (PVDF-HFP), ethylene-propylene-diene terpolymers (EPDM), tetrafluoroethylene hexafluoropropylene copolymers, polyethylene oxides (PEO), polyacrylonitriles (PAN), polyacryl methacrylates (PMMA), carboxymethylcelluloses (CMC), and derivatives and mixtures thereof.

Typical proportions of the individual constituents of the electrode material are preferably 90 parts by weight active material, e.g. of the lithium transition metal phosphate according to the invention, 5 parts by weight conductive carbon and 5 parts by weight binder. A different formulation likewise advantageous within the scope of the present invention consists of 90 - 96 parts by weight active material and 4 - 10 parts by weight conductive carbon and binder.

The object is further achieved by a secondary lithium secondary battery comprising a cathode according to the present invention.

In further embodiments of the present invention, the secondary lithium-ion battery according to the invention has a exemplary (but not limiting) cathode/anode pairs $LiFePO_4//Li_4Ti_5O_{12}$ with a single cell voltage of approx. 2.0 V, which is well suited as substitute for lead-acid cells or $LiCo_zMn_yFe_xPO_4//Li_4Ti_5O_{12}$ with increased cell voltage and improved energy density.

A still further object of the invention was to provide a process for the synthesis of lithium transition metal phosphates according to the invention.

Accordingly the process for the synthesis of a lithium transition metal phosphate according to the invention comprises the following steps of:

a) providing $Li_{0.9+x}Fe_{1-y}M_yPO_4$ in particle form,
b) preparing an aqueous suspension and - optionally - adding a carbon precursor compound
c) subjecting the aqueous suspension to a wet-milling treatment,
d) spray-drying of the milled suspension to obtain secondary agglomerates of $Li_{0.9+x}Fe_{1-y}M_yPO_4$,
e) heat treatment of the secondary agglomerates.

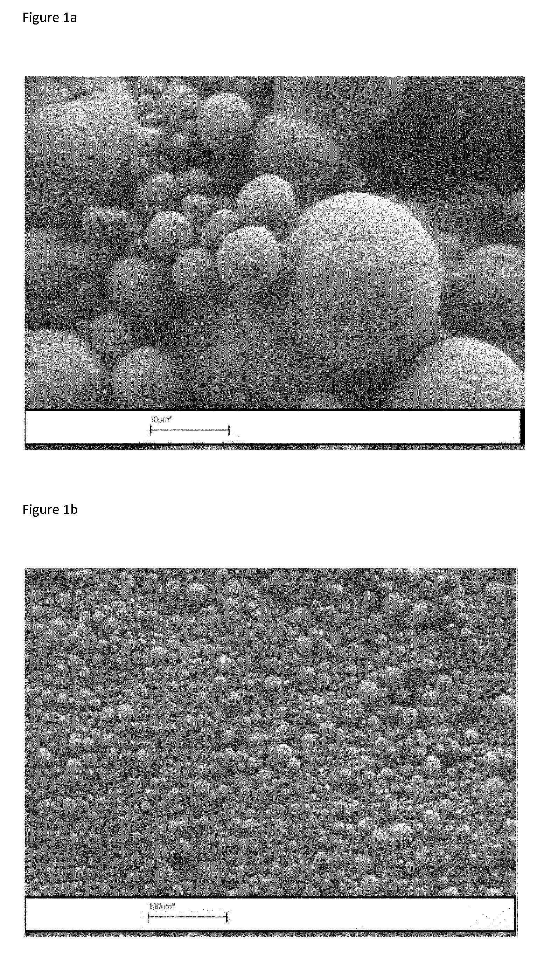

Optionally one or two particle classifying process steps can be added after spray drying, e.g. screening, sifting or sieving. In particular a sieving and/or sifting step may be carried out with a nominal mesh size of 33 $\mu$m to 40 $\mu$m. Figure 1a and 1b show SEM photographs of the material obtained in the process according to the invention.

The process according to the invention provides in one embodiment therefore $Li_{0.9+x}Fe_{1-y}M_yPO_4$ in the form of secondary agglomerates with the properties as described above and in another specific embodiment also $Li_{0.9+x}Fe_{1-y}M_yPO_4$ comprising carbon in the sense as discussed beforehand. The particle size distribution of the so obtained product has a value for $d_{50}$ of 10-20 $\mu$m, preferably 15-20 $\mu$m.

The wet-milling treatment in step c) before subjecting the suspension to spray drying yields surprisingly $Li_{0.9+x}Fe_{1-y}M_yPO_4$ in the form of secondary agglomerates which does not have the disadvantages of the $Li_{0.9+x}Fe_{1-y}M_yPO_4$ in the form of secondary agglomerates in the prior art. The milling provides surprisingly more compact particles without substantially affecting the BET-surface of the secondary particles. The secondary particles have a BET-surface of 6-15 m$^2$/g. After spray drying, the product according to the invention, i.e. the $Li_{0.9+x}Fe_{1-y}M_yPO_4$ in the form of secondary agglomerates (with or without carbon) has a high packing density of the secondary agglomerates which in turns provides a high bulk and tap density.

Without being bound by theory it appears that the wet-milling step yields a material with increased capacity and rate characteristics when used as electrode active material in secondary lithium ion batteries.

$Li_{0.9+x}Fe_{1-y}M_yPO_4$ in particle form, i.e. the primary particles, can be synthesized by a variety of synthetic pathways, like for example via solid-state reactions, co-precipitation, a hydrothermal method or by a so-called supercritical hydrothermal method and is for the purpose of the present invention not limited to a specific synthetic pathway.

In this specific embodiment of the process according to the invention, a carbon precursor compound, in other words a carbon-containing material is added during step b. This can be either pure carbon, such as e.g. graphite, acetylene black or Ketjen black, or a carbon-containing precursor compound which then decomposes when exposed to the heat treatment in step e) to a carbonaceous residue. Representative non limiting examples of such a carbon containing compound are e.g. starch, maltodextrin, gelatine, a polyol, a sugar such as mannose, fructose, sucrose, lactose, glucose, galactose, a partially water-soluble polymer such as e.g. a polyacrylate, etc. and mixtures thereof.

In a further embodiment of the process according to the invention, an additional water soluble binder is added in step b). In still a further embodiment of the process according to the invention an additional dispersion agent is also added in step b).

As a binder, a carbon containing compound which additionally contains only hydrogen and oxygen and pyrolyzes by applying a heat treatment to elemental carbon is preferred. Preferred are lactose, glucose, sucrose or mixtures thereof since the use of these sugars increases the fluidity (and thus the maximum possible solid content) of the suspension in the further process steps, especially during spray-drying. In a specific embodiment, sucrose is used since it allows the highest drying rates without undesirable effects on the resulting agglomerates like hollow agglomerates. Further binders useful for the purpose of the invention are for example hydroxypropylcellulose, polyvinylalcohol, polyethyleneglycol, polyethyleneoxide, polyacrylates etc. It is also part of the invention to use more than one binder.

The dispersion agent is water soluble and should also contain only carbon, hydrogen and oxygen, i.e. should also carbonize under a heat treatment regime. As an especially preferred dispergation agent, solid organic acids can be used in the process according to the invention. These acids comprise but are not limited to citric acid, tartric acid etc. Further dispersion agents useful for the purpose of the invention are for example maleic acid, ascorbic acid, oxalic acid, glycolic acid, 1,2,3,4 butanetetracarboxylic acid etc. and mixtures thereof.

Part of the invention is the use of a combination of different dispersion agents, e.g. citric acid and glycolic acid.

It has been found that even tiny amounts of dispersion agent (or a mixture of dispersion agents) of 0.05 mass-% (based on the mass of the lithium transition metal phosphate) are sufficient to obtain the desired product of the invention. The amount of dispersion agent is usually in the range of 0.05-2 mass-% (based on the mass of the lithium transition metal phosphate).

The suspension in step b) is preferably set to a pH value of between 6 and 8, preferably 7 by adding the acid dispersion agent.

The process according to the invention includes an optional pre-milling or dispergation treatment before step c).

The milling in step c) is carried out stepwise or continuously. Preferably the milling is carried out in a ball mill. The preferred diameter of the grinding beads is 200 - 500 $\mu$m, most preferably 300 $\mu$m. The grinding beads consist of a material which does not contaminate the desired $Li_{0.9+x}Fe_{1-y}M_yPO_4$ according to the invention, i.e a material which does not show abrasion and/or chemical reactivity. Preferably a non-metallic material is used (albeit stainless steel may also be used) as for example stabilized or non-stabilized zirconia or aluminum oxide. The milling compartment and the milling unit are also coated and/or protected by a protective layer to avoid contamination of the product by abrasion and/or a chemical reaction. Preferably, the coating/protective layer is made of or comprises polyurethane or a ceramic material, like zirconia, silicon nitride, silicon carbide, the latter being especially preferred.

In a further embodiment of the process according to the invention, a dispersion agent as described above is added during the milling step c).

The milling energy introduced into the suspension is preferably set between 100-600 kWh/t, more preferably 120-300 kWh/t, especially preferred 150-200 kWh/t while the reference mass (t) refers to the mass of the solids in the suspension. This energy generates heat so that the suspension has to be cooled by a suitable cooling device. The low milling energies contribute to a significant energy saving in the manufacture of lithium transition metal phosphates with the advantageous properties as described above compared to processes with higher milling energies.

Also during the milling step, further dispersion agent(s) can be added stepwise or continuously. Surprisingly it was found that mainly two factors, i.e. the diameter of the grinding balls and the milling energy introduced during milling affect the primary particle size and the subsequent structure and properties of the secondary agglomerates.

Surprisingly it was found that the BET surface of the product is dependent on the milling energy introduced in the suspension in step c) of the process according to the invention though the BET surface is not substantially altered by the milling step according to the present invention compared to non-milled material. In the present invention, the BET surface is typically in the range of 6-15 $m^2$/g.Unmilled i.e. according to the prior art a BET of 10 $m^2$/g was obtained. With a milling energy of 100 kWh/t and grinding beads of 300 $\mu$m diameter, a BET surface of 10.5 $m^2$/g was obtained. With a milling energy of 150 kWh/t and grinding beads of 300 $\mu$m diameter, a BET surface of 11 $m^2$/g was obtained. With a milling energy of 300 kWh/t and grinding beads of 300 $\mu$m diameter, a BET surface of 12 $m^2$/g was obtained. With a milling energy of 600 kWh/t and grinding beads of 300 $\mu$m diameter, a BET surface of 14 $m^2$/g was obtained. In contrast to the present invention with a milling energy of 1200 kWh/t and grinding beads of 100 $\mu$m diameter, a BET surface of 28 $m^2$/g was obtained.

A similar phenomenon can be observed for the bulk and tap porosity which also appear to be dependent upon the milling energy introduced in the suspension/slurry:

For $LiFePO_4$, the following values can be found as shown in table 1 compared to a prior art $LiFePO_4$ synthesized according to US 2010/0233540 without a milling step before spray drying

Table 1: Bulk and Tap Porosity vs. Milling Energy for $LiFePO_4$:

| Milling Energy | Bulk Porosity | Tap Porosity |
|---|---|---|
| Unmilled (prior art) | 85% | 75% |
| 100 kWh/t | 74% | 64% |
| 150 kWh/t | 72% | 60% |
| 300 kWh/t | 69% | 58% |
| 600 kWh/t | 69% | 56% |

Already at low milling energies low porosities, i.e also leading to higher bulk and tap densities are observed. This means also that higher electrode densities and capacities can be obtained by the material obtained by the process according to the invention compared to prior art materials and processes.

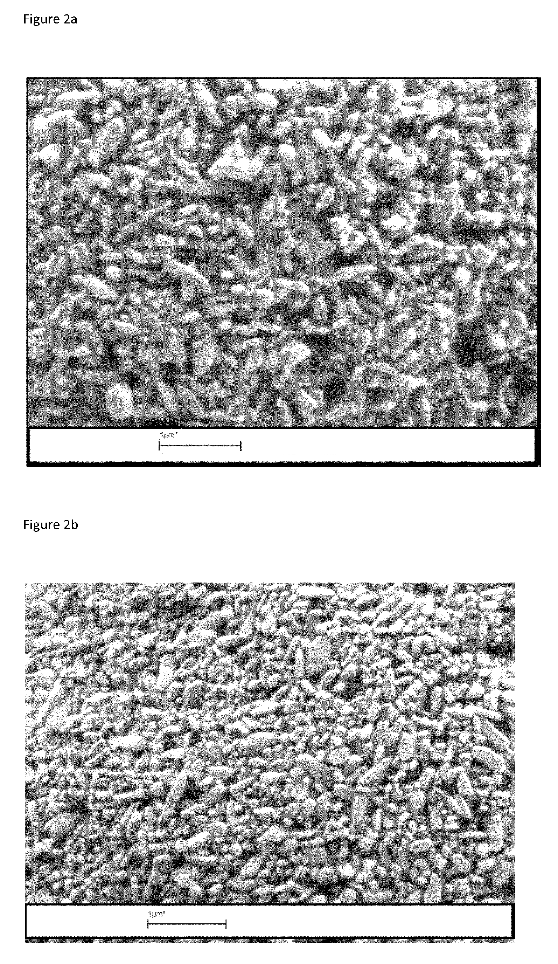

Figure 2a and 2b show the difference in (primary) particle packing according to the invention (figure 2b) and to the prior art (figure 2a). The primary particle packing in the secondary agglomerate with the milling step according to the invention (figure 2b) is much denser than in the corresponding agglomerate of the prior art (figure 2a).

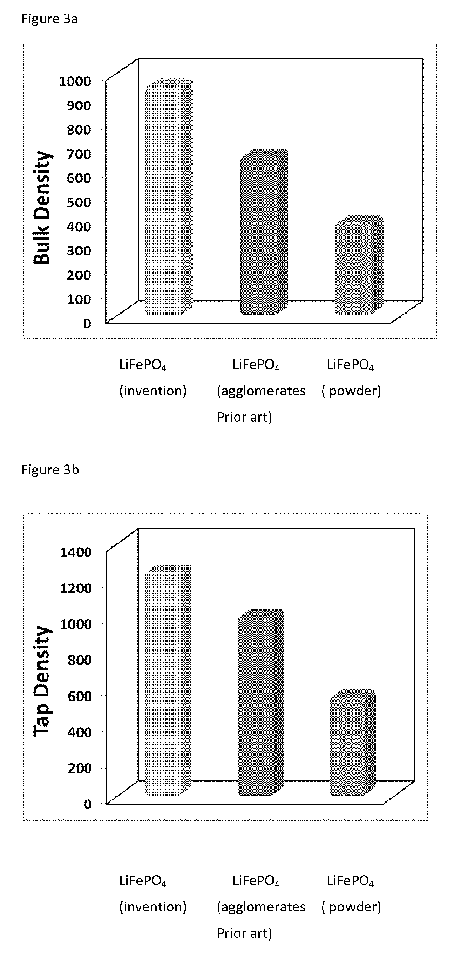

The influence on the bulk and tap density is demonstrated in table 2 and in figures 3a and 3b where the prior art material has the lowest densities and the material according to the invention the highest densities.

Table 2: Bulk and Tap Density vs. Milling Energy for $LiFePO_4$:

| Milling Energy | Bulk Density (typically) | Tap Density (typically) |
|---|---|---|
| Unmilled (prior art) | 550 g/l | 900 g/l |
| 100 kWh/t | 900 g/l | 1300 g/l |
| 150 kWh/t | 1000 g/l | 1400 g/l |
| 300 kWh/t | 1100 g/l | 1500 g/l |
| 600 kWh/t | 1100 g/l | 1550 g/l |

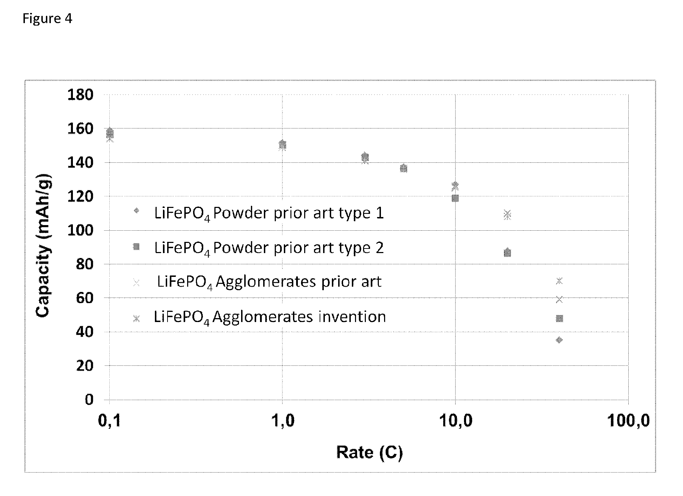

The capacity of $LiFePO_4$ as active material in an electrode (prepared as described in the experimental part) is listed in table 3. The impact of the present invention on the electrode discharge capacity of these materials can be seen in table 3 and in figure 4. The material of the prior art is unmilled and the material according to the present invention is listed with variation of the milling energy. As can be clearly seen in figure 4, the material according to the present invention shows the best capacity at high cycling rates over the materials of the prior art either in powder or agglomerate form.

Table 3: Discharge capacity of $LiFePO_4$ at different C-rates vs. milling energy

| Milling Energy | C/12 | 1C | 3C | 5C | 10C |
|---|---|---|---|---|---|
| Unmilled (prior art) | 151.8 | 144.9 | 135.7 | 129.3 | 117.4 |
| 150 kWh/t | 153.5 | 145.4 | 136.8 | 131.0 | 118.8 |
| 200 kWh/t | 153.8 | 147.0 | 139.3 | 133.5 | 122.1 |

(continued)

| Milling Energy | C/12 | 1C | 3C | 5C | 10C |
|---|---|---|---|---|---|
| 300 kWh/t | 154.2 | 148.2 | 141.1 | 135.6 | 124.4 |
| 600 kWh/t | 159.0 | 152.7 | 144.6 | 138.8 | 127.5 |

After the milling step c) a further dispergation treatment can be carried out. This treatment performed by any commercially available dispersing equipment, e.g. a rotor/stator disperser or a colloid mill, can be useful for suspensions re-agglomerating before spray drying in order to prevent the atomizer from clogging and to decrease the viscosity of the suspension prior to atomization.

In a further embodiment of the process according to the invention, the spray-drying in the step d) is carried out at a temperature between 120-500°C. The spray drying can be carried out by any commercially available device for spray drying, e.g. a conventional co-current spray dryer. The atomization of the slurry is carried out with a rotary atomizer, a hydraulic nozzle, a pneumatic nozzle, a combined hydraulic and pneumatic nozzle with pressure on the slurry/suspension and a gaseous spraying medium, or a ultrasonic atomizer. Particularly preferred are a rotary atomizer or a pneumatic nozzle.

Another surprising feature of the process of the present invention is the high content of solids in the suspension/slurry used for spray drying compared to prior art processes like for example in US 2010/0233540 A1. In the present invention a very high solid content can be used, namely 20-70%, preferably 40-65% in other embodiments 45-55%.

The drying of the suspension/slurry is carried out at gas entry temperatures in the spray-drying apparatus of 120-500°C, usually between 200-370°C. The exit temperatures are in the range of 70-120°C. The separation of the solid product from the gas can be done with any commercially available gas-solid separation system, e.g. a cyclone, an electrostatic precipitator or a filter, preferably with a bag filter with a pulsed jet dedusting system.

The dried secondary agglomerates of $Li_{0.9+x}Fe_{1-y}M_yPO_4$ are then subjected to a heat treatment.

The heat treatment (step e) of the process according to the invention) is in one embodiment of the invention a pyrolysis which is carried out at a temperature of between 500°C and 850°C, preferably between 600-800°C, especially preferred between 700-750°C in a continuously operated rotary kiln. It is understood that any other suitable device can be used as well for the purpose of the present invention. At this temperature the carbon precursor compound present in one embodiment of the process according to the invention is pyrolyzed to carbon which then wholly or at least partly covers the $Li_{0.9+x}Fe_{1-y}M_y(PO_4)$ primary particles as a layer (coating). The pyrolysis is typically carried out over a period of ca. 1 h.

Nitrogen is used as protective gas during the pyrolysis for production engineering reasons, but all other known protective gases such as for example argon etc., as well as mixtures thereof, can also be used. Technical-grade nitrogen with low oxygen contents can equally also be used.

Optionally one or two particle classifying process steps can be added to remove either a coarse or a fine fraction of the secondary agglomerates or both. This can be done by any commercially available equipment for particle classifying e.g. a cyclone, an air classifier, a screen, a sieve, a sifter or a combination thereof. In one embodiment of the invention the heat treated secondary agglomerates of $Li_{0.9+x}Fe_{1-y}M_yPO_4$ are sieved on a tumbler screening machine with combined ultrasonic and air brush cleaning at a nominal mesh size of 33 µm to 40 µm, preferably 40 µm. The fine fraction is taken as the product the coarse fraction is then rejected.

The invention is further explained by way of figures and exemplary embodiments which are by no means meant to be limiting the scope of the invention.

Figure 1    shows both in figure 1a and 1b a SEM image of secondary agglomerates of $LiFePO_4$ according to the invention,

Figure 2    shows SEM images of primary particles of the secondary agglomerates of $LiFePO_4$ according to the invention (2b) and of primary particles of a material obtained in a process of the prior art (2a),

Figure 3    shows the comparison of bulk (3a) and tap (3b) densities of prior art materials with material according to the invention,

Figure 4    shows a comparison in capacity of electrodes according to the invention and of prior art materials upon cycling.

***Experimental***

*1. General*

*Determination of the particle-size distribution:*

The particle-size distributions for the secondary agglomerates are determined using a light scattering method using commercially available devices. This method is known *per se* to a person skilled in the art, wherein reference is also made in particular to the disclosure in JP 2002-151082 and WO 02/083555. In this case, the particle-size distributions were determined by a laser diffraction measurement apparatus (Mastersizer 2000 APA 5005, Malvern Instruments GmbH, Herrenberg, DE) and the manufacturer's software (version 5.40) with a Malvern dry powder feeder Scirocco ADA 2000. The setting of the refractive index of the material was 0.00 because the Fraunhofer data analysis method was used. The sample preparation and measurement took place according to the manufacturer's instructions. An air dispersion pressure of 0.2 bar was used.

The $D_{90}$ value gives the value at which 90% of the particles in the measured sample have a smaller or the same particle diameter according to the method of measurement. Analogously, the $D_{50}$ value and the $D_{10}$ value give the value at which 50% and 10% respectively of the particles in the measured sample have a smaller or a same particle diameter according to the method of measurement.

According to a particularly preferred embodiment of the invention, the values mentioned in the present description are valid for the $D_{10}$ values, $D_{50}$ values, the $D_{90}$ values as well as the difference between the $D_{90}$ and $D_{10}$ values relative to the volume proportion of the respective particles in the total volume. Accordingly, the $D_{10}$, $D_{50}$ and $D_{90}$ values mentioned herein give the values at which 10 volume-% and 50 volume-% and 90 volume-% respectively of the particles in the measured sample have a smaller or the same particle diameter. If these values are obtained, particularly advantageous materials are provided according to the invention and negative influences of relatively coarse particles (with relatively larger volume proportion) on the processability and the electrochemical product properties are avoided. Preferably, the values mentioned in the present description are valid for the $D_{10}$ values, the $D_{50}$ values, the $D_{90}$ values as well as the difference between the $D_{90}$ and the $D_{10}$ values relative to both percentage and volume percent of the particles.

For compositions (e.g. electrode materials) which, in addition to the lithium-transition-metal phosphates according to the invention contain further components, in particular for carbon-containing compositions and electrode formulations, the above light scattering method can lead to misleading interpretations as the lithium-transition-metal phosphates secondary agglomerates can form further and larger agglomerates within the dispersion. However, the secondary particle-size distribution of the material according to the invention can be directly determined as follows for such compositions using SEM photographs:

A small quantity of the powder sample is suspended in 3 ml acetone and dispersed with ultrasound for 30 seconds. Immediately thereafter, a few drops of the suspension are dropped onto a sample plate of a scanning electron microscope (SEM). The solids concentration of the suspension and the number of drops are measured so that a large single-ply layer of powder particles forms on the support in order to prevent the powder particles from obscuring one another. The drops must be added rapidly before the particles can separate by size as a result of sedimentation.

After drying in air, the sample is placed in the measuring chamber of the SEM. In the present example, this is a LEO 1530 apparatus which is operated with a field emission electrode at 1.5 kV excitation voltage, an aperture of 30 $\mu$m, an SE2 detector, and 3-4 mm working distance. At least 20 random sectional magnifications of the sample with a magnification factor of 20,000 are photographed. These are each printed on a DIN A4 sheet together with the inserted magnification scale. On each of the at least 20 sheets, if possible at least 10 free visible particles of the material according to the invention, from which the powder particles are formed together with the carbon-containing material, are randomly selected, wherein the boundaries of the particles of the material according to the invention are defined by the absence of fixed, direct connecting bridges. On the other hand, bridges formed by carbon material are included in the particle boundary. Of each of these selected particles, those with the longest and shortest axis in the projection are measured in each case with a ruler and converted to the actual particle dimensions using the scale ratio. For each measured $Li_{0.9+x}Fe_{1-y}M_yPO_4$ particle, the arithmetic mean from the longest and the shortest axis is defined as particle diameter. The measured $Li_{0.9+x}Fe_{1-y}M_yPO_4$ particles are then divided analogously to the light-scattering method into size classes.

The differential particle-size distribution relative to the volume of particles is obtained by plotting the volume of the associated particles in each case against the size class. The volume of the associated particles $V$ is approximated by the sum of the spherical volumes of each of these n particles $V_i$ calculated from their corresponding particle diameters $d_i$:

$$V = \sum_{i=1}^{n} V_i = \frac{\pi}{6} \sum_{i=1}^{n} d_i^3$$

. The cumulative particle-size distribution from which $D_{10}$, $D_{50}$ and $D_{90}$ can be read directly on the size axis is obtained by continually totaling the particle volumes from the small to the large particle classes.

The described process was also applied to battery electrodes containing the material according to the invention. In this case, however, instead of a powder sample a fresh cut or fracture surface of the electrode is secured to the sample holder and examined under a SEM.

BET measurements were carried out according to DIN-ISO 9277.

Bulk density was determined according to ISO 697 (formerly DIN 53912).

Tap density was measured according to ISO 787 (formerly DIN 53194).

Press density and Powder Resistivity were measured at the same time with a combination of a Lorenta-CP MCP-T610 and a Mitsubishi MCP-PD 51 device. The Powder Resistivity is calculated according to formula:

```
Powder resistivity [Ωcm] = resistance [Ω] x thickness [cm] x
                                  RCF
    (RCF = device dependent Resistivity Correction Factor)
```

Pressure density was calculated according to the formula

$$\text{Pressure density } [g/cm^3] = \frac{\text{mass of sample } [g]}{\pi \times r^2 [cm^2] \times \text{thickness of the sample } [cm]}$$

The porosities were obtained from the corresponding measured densities according to the following formula:

$$\text{Porosity} = \frac{1 - \text{density}}{\text{true material density}}$$

(the true material density was determined according to ISO 1183-1). For pure LiFePO$_4$, the value is 3.56 kg/l.

The SEM images taken with the LEO 1530 apparatus were recorded in tif file format at a resolution of 1024x768.

Spray drying tests were performed in a Nubilosa spray dryer 1.25 m in diameter, 2.5 m in cylindrical height and 3.8 m in total height. The spray dryer was equipped with pneumatic nozzles type 970 form 0 S3 with an open diameter of 1.2 mm and type 940-43 form 0 S2 with an open diameter of 1.8 mm both of Düsen-Schlick GmbH, Hutstraße 4, D-96253 Untersiemau, Germany. Drying gas was supplied by a controlled suction fan and heated electrically before entering the spray dryer. The dried particles were separated from the gas stream by a bag filter and recovered by a pulsed jet dedusting system. Amount of drying gas, gas inlet temperature and outlet temperature were controlled by a process control system. The outlet temperature control governed the speed of the slurry feed pump. Atomization gas was supplied by the compressed air distribution of the plant and its pressure was controlled by a local pressure controller.

Pyrolysis tests were performed in a rotary kiln type LK 900-200-1500-3 of HTM Reetz GmbH, Köpenicker Str. 325, D-12555 Berlin, Germany. Its heated rotary tube was 150 mm in diameter and 2.5 m in length. It provided a preheating zone, three heated separately controlled temperature zones, and a cooling zone. The inclination of the tube could be adjusted and its rotational speed was variably controlled. Product was supplied by a controlled screw feeder. Product supply, the kiln itself and product outlet could be blanketed by nitrogen. The amount of pyrolyzed product could be continuously monitored by a balance.

Milling was performed in an agitated ball mill MicroMedia™ P2 by Bühler AG, CH-9240 Uzwil, Switzerland, with SSiC ceramic cladding. It was filled with yttrium stabilized zirconium oxide beads of nominal 300 μm diameter. Its peripheral speed was controlled between 6.5 and 14.0 m/s. The milling compartment had a volume of 6.3 liter. The drive had a power rating of 30 kW. Heat was removed through the walls of its milling compartment by cooling water. The slurry to be milled was passed from an agitated vessel via a controlled peristaltic pump through the mill back to the vessel. This closed loop was operated until the desired specific milling energy had been reached.

*2. Synthesis of the primary particles of lithium transition metal phosphates*

The lithium transition metal phosphates, for example $LiFePO_4$ $LiCoPO_4$, $LiMnPO4$, were obtained via hydrothermal synthesis according to WO2005/051840. The synthesis method can be applied to all lithium transition metal phosphates like $Li_{0.9+x}Fe_{1-y}Mg_y(PO_4)$, $Li_{0.9+x}Fe_{1-y}Nb_y(PO_4)$, $Li_{0.9+x}Fe_{1-y}Co_y(PO_4)$, $Li_{0.9+x}Fe_{1-y}Zn_y(PO_4)$, $Li_{0\cdot9+x}Fe_{1-y}Al_y(PO_4)$, $Li_{0.9+x}Fe_{1-y}(Zn,Mg)_y(PO_4)$, $Li_{0.9+x}Fe_{1-y}Mn_y(PO_4)$ as well.

The term "hydrothermal synthesis or conditions" means for the purpose of the present invention temperatures of 100°C to 200°C, preferably 100°C to 170°C and quite particularly preferably 120°C to 170°C as well as a pressure of 1 bar to 40 bar vapour pressure. In particular, it has surprisingly been shown that the synthesis at the quite particularly preferred temperature of 120 - 170°C, in particular at $160 \pm 5$°C, leads to an increase in the specific capacity of the thus-obtained $Li_{0.9+x}Fe_{1-y}M_y(PO_4)$ according to the invention compared with reaction at more than $160$°C $\pm 5$°C.

The intermediate product is typically obtained in the form of a wet filter cake before preparing an aqueous suspension according to process step b).

*3. Synthesis of the lithium transition metal phosphates in the form of secondary agglomerates*

3.1 Preparation of $LiFePO_4$ secondary agglomerates:

The wet filter cake consisting essentially of $LiFePO_4$ primary particles typically in form of needles and platelets is mixed with 10 mass-% of lactose (based on the solid lithium iron phosphate). A suspension with 52.5% solid content is prepared with distilled water to maximize the efficiency of the following milling step.

The suspension is then continuously milled with a ball mill with grinding beads having a diameter of 300 $\mu$m. The grinding beads consist of a stabilized zirconium oxide ceramic. The milling reactor was cladded with silicon carbide to avoid a contamination of the product and to allow an effective cooling.

The energy introduced into the suspension is removed by cooling the suspension, wherein the main amount of the heat is directly removed by the mill.

The mechanical energy applied to the suspension was 150 kWh/t.

After milling the suspension was spray-dried via a pneumatic nozzle. The solid content of the suspension was 52.5%.

During spray-drying the gas inlet temperature was 300°C, the outlet temperature was 105°C.

The separation of the solid product from the gas was carried out in a bag filter. The dried agglomerate was further pyrolized in inert gas atmosphere at 750°C in a rotary kiln. The product obtained had a bulk density of 1000 g/l, the tap density was 1390 g/l and the press density 2150 g/l.

SEM images were recorded of the so obtained product (see figures 1).

The characteristics of this product were:

| Term | Measured | Unit | Method |
|---|---|---|---|
| Crystal structure Olivine $LiFePO_4$ | > 95% | N/A | XRD |
| Carbon-content | 1.9 | wt% | C/S-Analyzer |
| PSD ($d_{10}$) | 5.4 | $\mu$m | Laser Diffraction (Malvern) |
| PSD ($d_{50}$) | 15.9 | $\mu$m | Laser Diffraction (Malvern) |
| PSD ($d_{90}$) | 32.9 | $\mu$m | Laser Diffraction (Malvern) |
| Specific surface area | 11 | $m^2/g$ | Nitrogen adsorption (BET) |
| Bulk Density | 1000 | g/l | |
| Tap density | 1390 | g/l | Automatic tap density analyzer |
| Volume Resistivity | 3.4 | $\Omega$cm | Powder Resistivity Analyzer |
| Press Density | 2.15 | $g/cm^3$ | Powder Resistivity Analyzer |
| pH value | 9.7 | | pH electrode |
| Spec. Capacity | 154 | mAh/g | $LiFePO_4/LiPF_6$ - EC-DMC/$Li^0$ Charge/Discharge at C/12, 25°C Range: 4.0 V - 2.0 V |

3.2 Preparation of $LiMnPO_4$ secondary agglomerates

The synthesis was carried out as in example 3.1. Instead $LiFePO_4$, $LiMnPO_4$ was used.

The product obtained had a bulk density of 1010 g/l, the tap density was 1380 g/l and the press density 2100 g/l. The BET-surface was 15 $m^2$/g.

3.3 Preparation of $LiCoPO_4$ secondary agglomerates

The synthesis was carried out as in example 3.1. Instead $LiFePO_4$, $LiCoPO_4$ was used.

The product obtained had a bulk density of 1000 g/l, the tap density was 1400 g/l and the press density 2120 g/l. The BET-surface was 10 $m^2$/g.

3.4 Preparation of $LiMn_{0.67}Fe_{0.33}PO_4$ secondary agglomerates

The synthesis was carried out as in example 3.1. Instead $LiFePO_4$, $LiMn_{0.67}Fe_{0.33}PO_4$ was used.

The product obtained had a bulk density of 1010 g/l, the tap density was 1410 g/l and the press density 2110 g/l. The BET-surface was 15 $m^2$/g.

*4. Preparation of an Electrode*

Electrodes were prepared by mixing 90 parts per weight of lithium-transition-metal-phosphate of the invention or carbon coated lithium-transition-metal-phosphate together with 5 parts of carbon. 5 parts of a binder were diluted in N-methyl-2-pyrrolidon solution and added to the mixture. The mixture was kneaded to give a slurry. The slurry was applied by a doctoral blade to an aluminium collector foil serving as a collector. The film was dried at 60°C under reduced pressure of 500 mbar for 2 h.

A platen press was used for densification. But any other press like for example a calander press is suitable as well. The pressing force was in the range of from 500 to 10000 $N/cm^2$, preferably 5000 to 8000 $N/cm^2$. The target value for the coating (active material) packing density was >1.5 $g/cm^3$ or higher, more preferably >1.9 $g/cm^3$.

The electrodes were dried for 2 more hours under vacuum, preferably at elevated temperatures of about 100°C. Cells were assembled as "coffee bag" cells (batteries), which consist of an aluminium coated polyethylene bag. Lithium metal was used as the counter electrode. 1M $LiPF_6$ was used as electrolyte in a 1:1 mixture of ethlylenecarbonate (EC):diethylenecarbonate (DEC). In each battery one layer of a microporous polypropylene-foil (Celgard 2500; Celgard 2500 is a trademark) having lithium ion permeability was used as the separator. The bags were sealed using a vacuum-sealing machine.

Measurements were performed in a temperature-controlled cabinet at 20°C using a Basytec cell test system (CTS). Voltage range for cycling was between 2.0V and 4.0V for pure $LiFePO_4$. For other cathode materials the voltage had to be adjusted according to the voltage profile of the system, e.g. for $LiFe_{0.33}Mn_{0.67}PO_4$ between 4.3 and 2.0 V.

**Claims**

**1.** Lithium-transition-metal-phosphate compound of formula $Li_{0.9+x}Fe_{1-y}M_y(PO_4)$ with $x \leq 0.3$ and $0 \leq y \leq 1$ and M is a metal or semimetal or mixtures thereof in the form of secondary particles made of agglomerates of primary particles, wherein the primary particles have a size in the range of 0.02-2 $\mu$m and the secondary particles have a mean size of 10-40 $\mu$m and a BET surface of 6-15 $m^2$/g and wherein the bulk density is in the range of 800-1200 g/l.

**2.** Lithium-transition-metal-phosphate according to claim 1 wherein the agglomerates have a porosity.

**3.** Lithium-transition-metal-phosphate according to claim 2 with a bulk porosity of 65-80%.

**4.** Lithium-transition-metal-phosphate according to claim 2 or 3 with a tap porosity of 55-65%.

**5.** Lithium-transition-metal-phosphate according to anyone of claims 1 to 4 with a tap density of 1250-1600 g/l.

**6.** Lithium-transition-metal-phosphate according to anyone of claims 1 to 5 with a press density of 2000-2800 g/l.

**7.** Lithium-transition-metal-phosphate according to anyone of the preceding claims which is $LiFePO_4$.

**8.** Lithium-transition-metal-phosphate according to anyone of the preceding claims 1 to 6 which is $LiMnPO_4$.

**9.** Lithium-transition-metal-phosphate according to anyone of claims 1 to 6 which is $Li_{0.9+x}Fe_{1-y}Mn_yPO_4$.

**10.** Lithium-transition-metal-phosphate according to anyone of the preceding claims comprising carbon.

**11.** Lithium-transition-metal-phosphate according to claim 10 wherein the primary particles have a conductive carbon deposit on at least a part of the surface of the primary particles.

**12.** A cathode for a lithium secondary battery comprising as active material a Lithium-transition-metal-phosphate according to anyone of claims 1 to 11.

**13.** Lithium secondary battery comprising a cathode according to claim 12.

**14.** Process for the manufacture of a Lithium-transition-metal-phosphate according to anyone of claims 1 to 11 comprising the following steps:

a) providing $Li_{0.9+x}Fe_{1-y}M_y(PO_4)$ in particle form,
b) preparing an aqueous suspension and - optionally - adding a carbon precursor compound,
c) subjecting the aqueous suspension to a wet-milling treatment,
d) spray-drying of the milled suspension to obtain agglomerates of $Li_{1+x}Fe_{1-y}M_y(PO_4)$,
e) heat treatment of the agglomerates.

**16.** Process according to claim 15, wherein after the spray-drying step d) a sieving and/or sifting step is carried out.

**17.** Process according to claim 15 or 16, wherein the carbon precursor compound is selected from starch, maltodextrin, gelatine, a polyol, a sugar such as mannose, fructose, sucrose, lactose, glucose, galactose, a partially water-soluble polymer or mixtures thereof.

**18.** Process according to claim 17, wherein in step b) an additional water soluble binder is added.

**19.** Process according to anyone of claims 15 to 18, wherein an additional dispersion agent is added in step b).

**20.** Process according to anyone of the preceding claims 15 to 19, wherein the suspension in step b) is set to a pH value of between 6 and 8.

**21.** Process according to anyone of claims 15 to 20 including an optional pre-milling or dispergation treatment before step c).

**22.** Process according to anyone of claims 15 to 21, wherein the milling in step c) is carried out stepwise or continuously.

**23.** Process according to claim 22, wherein the milling is carried out by a ball mill.

**24.** Process according to anyone of claims 15 to 22, wherein during the milling step c), a dispersion agent is added.

**25.** Process according to anyone of claims 15 to 24, wherein the milling energy introduced into the suspension is set to a value between 100-600 kWh/t.

**26.** Process according to anyone of claims 15 to 25, wherein after the milling step c) a further dispergation treatment is carried out.

**27.** Process according to anyone of claims 15 to 26, wherein the spray-drying in the step d) is carried out at a inlet drying gas temperature between 120-500°C.

**28.** Process according to anyone of claims 15 to 27, wherein the heat treatment in step e) is a pyrolysis carried out at a temperature between 500-850°C.

Figure 1a

Figure 1b

Figure 2a

Figure 2b

Figure 3a

Bulk Density

LiFePO₄
(invention)

LiFePO₄
(agglomerates
Prior art)

LiFePO₄
( powder)

Figure 3b

Tap Density

LiFePO₄
(invention)

LiFePO₄
(agglomerates
Prior art)

LiFePO₄
( powder)

Figure 4

Europäisches
Patentamt

European
Patent Office

Office européen
des brevets

## EUROPEAN SEARCH REPORT

**Application Number**

EP 13 15 9638

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 413 402 A1 (SUMITOMO OSAKA CEMENT CO LTD [JP]) 1 February 2012 (2012-02-01) * examples; tables 1,2 * ----- | 1-28 | INV. C01B25/45 H01M4/58 |
| X,D | US 2010/233540 A1 (CHOY SANGHOON [KR] ET AL) 16 September 2010 (2010-09-16) * column 3, paragraph 42-53 * * page 4, paragraph 71 - page 5, paragraph 87 * * examples * ----- | 1-28 | |
| A | EP 2 562 856 A2 (LG CHEMICAL LTD [KR]) 27 February 2013 (2013-02-27) * page 4, line 21 - page 5, line 39 * ----- | 1-28 | |

**TECHNICAL FIELDS SEARCHED (IPC)**

C01B
H01M

The present search report has been drawn up for all claims

| Place of search | Date of completion of the search | Examiner |
|---|---|---|
| Munich | 19 August 2013 | Besana, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 15 9638

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2013

| Patent document cited in search report | | | Publication date | Patent family member(s) | | | Publication date |
|---|---|---|---|---|---|---|---|
| EP 2413402 | A1 | | 01-02-2012 | CA | 2755802 | A1 | 30-09-2010 |
| | | | | CN | 102356488 | A | 15-02-2012 |
| | | | | EP | 2413402 | A1 | 01-02-2012 |
| | | | | JP | 2010251302 | A | 04-11-2010 |
| | | | | KR | 20110132566 | A | 08-12-2011 |
| | | | | US | 2012003540 | A1 | 05-01-2012 |
| | | | | WO | 2010109869 | A1 | 30-09-2010 |
| US 2010233540 | A1 | | 16-09-2010 | CA | 2741042 | A1 | 29-04-2010 |
| | | | | CN | 102186768 | A | 14-09-2011 |
| | | | | EP | 2360117 | A2 | 24-08-2011 |
| | | | | JP | 2012506362 | A | 15-03-2012 |
| | | | | KR | 20100044713 | A | 30-04-2010 |
| | | | | TW | 201029919 | A | 16-08-2010 |
| | | | | US | 2010233540 | A1 | 16-09-2010 |
| | | | | WO | 2010047524 | A2 | 29-04-2010 |
| EP 2562856 | A2 | | 27-02-2013 | CN | 102834957 | A | 19-12-2012 |
| | | | | EP | 2562856 | A2 | 27-02-2013 |
| | | | | JP | 2013525974 | A | 20-06-2013 |
| | | | | KR | 20110117359 | A | 27-10-2011 |
| | | | | US | 2013202946 | A1 | 08-08-2013 |
| | | | | WO | 2011132930 | A2 | 27-10-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009009758 A
- US 20100233540 A1
- US 20100233540 A
- JP 2002151082 A
- WO 02083555 A
- WO 2005051840 A

**Non-patent literature cited in the description**

- **PADHI, GOODENOUGH et al.** *J. Electrochem. Soc.,* 1997, vol. 144, 1188
- **YAMADA et al.** *J. Electrochem. Soc.,* 148
- **HERLE et al.** *Nature Materials,* 2004, vol. 3, 147-151
- **MORGAN et al.** *Electrochem. Solid State Lett.,* 2004, vol. 7 (2), A30-A32
- **YAMADA et al.** *Chem. Mater.,* 2004, vol. 18, 804-813
- **LOSEY et al.** *The Canadian Mineralogist,* 2004, vol. 42, 1105-1115
- **RAVET et al.** *Proceedings of 196th ECS meeting,* 1999, 99-102